# EUROPEAN PATENT SPECIFICATION

(11) **EP 3 072 401 B1**
(45) Date of publication and mention of the grant of the patent: **12.12.2018**
(21) Application number: 16161103.3
(22) Date of filing: 18.03.2016
(51) Int. Cl.: A23L 3/34, A23L 3/3454, A23L 3/3463

(54) **FILM-FORMING COMPOSITION FOR DISINFECTION AND PRESERVATION OF FOODSTUFFS**
FILMBILDENDE ZUSAMMENSETZUNG ZUR DESINFEKTION UND HALTBARMACHUNG VON LEBENSMITTELN
COMPOSITION FILMOGÈNE POUR DÉSINFECTION ET CONSERVATION DE PRODUITS ALIMENTAIRES

(30) Priority: 24.03.2015 IT UB20159677
(43) Date of publication of application: 28.09.2016
(73) Proprietor: Ticinum Immobiliare Agricola S.r.l., 20082 Binasco (MI) (IT)
(72) Inventor: GATTI, Luca Attilio Maria, 20082 BINASCO (MI) (IT)
(74) Representative: Bianchetti Bracco Minoja S.r.l.

(56) References cited:
- BAE O J ET AL: "Soap composition effective in cleaning and protecting skin", WPI / THOMSON,, vol. 2004, no. 20, 19 September 2003 (2003-09-19), XP002743560,
- ZHANG Q: "Bacteriostatic lotion comprises raw materials e.g. deionized water, avocado oil, deacetylated derivative of chitin, soybean essence extraction solution, vitamin E, white oil, stearic acid monoglyceride, triethanolamine, aloe vera gel", WPI / THOMSON,, vol. 2014, no. 42, 26 March 2014 (2014-03-26), XP002743561,
- ALVAREZ MARÍA V ET AL: "Antimicrobial efficiency of chitosan coating enriched with bioactive compounds to improve the safety of fresh cut broccoli", LWT- FOOD SCIENCE AND TECHNOLOGY, vol. 50, no. 1, 31 December 2013 (2013-12-31), pages 78-87, XP028939657, ISSN: 0023-6438, DOI: 10.1016/J.LWT.2012.06.021
- DATABASE BIOSIS, [Online] 1 January 2011 (2011-01-01), MARPUDI SAI LAKSHMI ET AL: "Enhancement of storage life and quality maintenance of papaya fruits using Aloe vera based antimicrobial coating", XP002743562, retrieved from BIOSIS Database accession no. PREV201100230915

## Description

The present invention relates to an aqueous composition comprising an *Aloe vera* extract, chitosan, organic acids and plant extracts. The composition according to the invention forms an antiseptic protective membrane on foodstuffs.

### TECHNICAL BACKGROUND

Foods consist of organic material, a medium suitable for the development of pathogenic micro-organisms. They can therefore be contaminated during any of the various stages of production, packaging and ripening in warehouses, retail sale in open-air locations (street markets), and storage in improper premises (wood or steel cupboards) or contaminated refrigerators.

Cleaning and disinfection of foodstuffs, their manufacturing equipment and packaging materials is a critical factor in the food industry, which requires increasingly high standards to ensure that the bacteria count in foods is minimised or eliminated in order to guarantee an adequate shelf life in the food chain, from production to distribution.

According to the FAO guidelines relating to food production equipment, the term "cleaning" means elimination of dirt, dust and organic and inorganic substances from all surfaces of machinery and equipment, and the buildings in which they are present.

Cleaning eliminates the majority of micro-organisms (over 90%), but not all, because many micro-organisms adhere strongly to surfaces in the form of very thin layers of organic material (known as biofilms), and are able to survive even repeated deep-cleaning. There is consequently a need for disinfection, namely the use of treatments with antimicrobial agents such as boiling water, steam or disinfectant compounds.

The micro-organisms most widely present in cases of food contamination, especially in dairy foods, are pathogenic micro-organisms such as *Staphylococcus aureus, Escherichia coli, Pseudomonas aureus, Bacillus subtilis, Bacillus cereus, Salmonella* and especially *Listeria monocytogenes* (L.M.). Said micro-organism, which is very widespread in the environment, is responsible for serious illnesses in humans and animals, and is particularly dangerous to at-risk individuals such as the elderly, pregnant women and newborns. L.M. infection is manifested by diarrhoea appearing a few hours after ingestion, and can cause acute forms of sepsis, encephalitis and meningitis. The transmission route is mainly via food.

*Listeria monocytogenes* may be present in raw foods and, unlike other pathogenic germs, can even multiply in foods cooled in refrigerators, because it survives at temperatures below 5°C. It is mainly found in unpasteurised raw milk, cheese, especially soft cheeses, made with unpasteurised raw milk, unwashed fruit and vegetables, prepared meat products, raw meat and fish, and animal feed.

*Listeria monocytogenes* is known to be difficult to eliminate due to its ability to survive in dairy products, even at low temperatures (Farber J. M. et al., Listeria monocytogenes, a food-borne pathogen, Microbiol. Rev.55-476.-579-1991). Another characteristic is its ubiquity, making it difficult to eliminate from cheese factories, which contain numerous niches useful for its survival.

The extent to which cheese products are contaminated depends partly on the type of cheese, ie. whether it is made with raw or pasteurised milk, and the physicochemical characteristics of the rind. Bacteria find a particularly favourable environment in soft cheeses such as gorgonzola.

Various techniques currently exist to prevent contamination of foodstuffs by pathogens, especially *Listeria monocytogenes.* Some cheese factories use lactic acid combined with liquid nitrogen; others use high pressure (H.P.P.) (Food manufacturing 72.21-25.1997) which, when applied to raw milk, selectively eliminates L.M., while safeguarding the enzymatic activity present which plays an important part in the quality of the cheese. The value of the end product, due to the formation of lactic acid, not only improves its quality, but also reduces contamination by *Escherichia coli.*

Packaging in an inert atmosphere (nitrogen, carbon dioxide) inhibits the growth of L.M.

KR 220030074502 discloses a soap to be applied on the skin. The described composition is inedible and it is not film-forming, it contains very low percentages of Aloe vera (up to 1%) and chitosan oil.

CN103655298 describes a topic bacteriostatic lotion containing Aloe vera but no chitosan. Such composition too is inedible and it has no film-forming features.

Alvarez Maria et al., LWT-Fod Science Technology. Vol 50, No1, 21,12,.2013, pages 78-87, describes a composition comprising chitosan and antibacterial natural ingredients (propolis, rosemary, Malaleuca oil, pollen) for broccoli preservation.

MARPUDI SAI LAKSHMI ET AL: "Enhancement of storage life and quality maintenance of papaya fruits using Aloe vera based antimicrobial coating", XP002743562, retrieved from BIOSIS, Database accession no. PREV201100230915 describes an Aloe vera based composition for papaya fruits preservation.

However, the methods currently used during manufacture reduce L.M. contamination to the minimum tolerable level without eliminating it completely, partly due to the possibility of contamination during the stages after processing.

In order to safeguard the health of the community, there is consequently a strongly felt need for increasingly effective cleaning and disinfection processes that eliminate all possibility of contamination of the end product.

The invention described below relates to a film-forming composition comprising *Aloe vera* extracts, chitosan, organic acids, plant extracts and optionally bacteriocin extracts able to form a membrane that prevents Listeria contamination of the foods to which it is applied.

*Aloe vera* is a perennial belonging to the Liliaceae family, mainly originating in Africa, from which a gel and a transparent mucilage, obtained from the inner pulp of the leaves, are extracted. The gel contains vitamins, especially vitamins A, B1, B2, B3, B6, B12, C, and E; mineral salts, in particular calcium, phosphorus, iron, sodium, magnesium, manganese, copper, zinc and chromium; glycoproteins, amino acids, enzymes and plant hormones; plant steroids with a natural anti-inflammatory activity; and polysaccharides, which rebalance the immune system.

### DESCRIPTION OF THE INVENTION

It has now been found that the use of an aqueous composition containing *Aloe vera* extract, chitosan, organic acids, plant extracts and optionally bacteriocin extracts leads to the formation of an edible protective membrane that solves the problem of contamination by pathogenic bacteria, especially *Listeria monocytogenes,* thus providing consumers with a food product of high quality from the start of production until the time of consumption.

The invention therefore relates to an aqueous composition comprising an *Aloe vera* extract, chitosan, organic acids, plant extracts and optionally bacteriocin extracts. The composition according to the invention is defined by the appended claims.

The compositions according to the invention can also contain polysaccharides such as xanthan gum and polyelectrolytes such as deacetylated chitin.

Organic acids according to the invention are lactic, salicylic, linoleic, acetic and propionic, oxalic, formic, elenolic, oleic and sorbic acids and oleuropein. Salicylic acid, lactic acid, oleic acid and linoleic acid, optionally conjugated, are particularly preferred.

The plant extracts are extracts of oregano, thyme, *Olea europea,* rosemary, eucalyptus, mulberry, frankincense or sumac. Powders of said plants, olive oil derivatives and olive-mill water can also be used.

Further ingredients of the compositions according to the invention include ethylenediaminetetraacetic acid (EDTA) disodium salt, thickeners such as gelatin, sodium alginate, sodium carbonate, carboxymethylcellulose, nisin (an antibacterial produced from *Lactobacillus curvatus*) and silver proteinate. The thickeners, polyelectrolytes and polysaccharides increase the consistency of the membrane.

According to the invention, "*Aloe vera* extract" means the aqueous extract of *Aloe vera.* The aqueous composition used in the process according to the invention will contain *Aloe vera* extract in concentrations ranging between 30 and 50% by weight, preferably at a concentration of 40%.

*Aloe vera* extract has proved very effective against contamination by pathological bacteria such as *Salmonella, Pseudomonas spp, Staphylococcus aureus, Escherichia coli, Candida albicans, Bacillus subtilis, Bacillus cereus,* and especially *Listeria monocytogenes.*

*Aloe vera* gel is present in the compositions according to the invention in percentages ranging between 10 and 50% by weight, preferably between 20 and 40%; chitosan in percentages ranging between 1 and 15% by weight, preferably between 2 and 10%; acids or mixtures of acids in percentages ranging between 10 and 50% by weight; and plant extracts or powders in percentages ranging between 5 and 20% by weight.

The compositions of the invention form on foods, and optionally on packaging materials, a membrane which is protective at an acid pH (between 2.5 and 4) and disinfectant, safeguards the ripening processes, and aids food storage on consumers' premises. The membrane according to the invention protects the product against the bacteria described at temperatures of up to 10 degrees or more, ensuring the preservation of the food and considerable energy saving, even for foodstuffs other than dairy products. The foods can be stored for months, even without prior treatment with preservatives and/or bacteriocins such as nisin.

The composition of the invention is particularly useful for those sectors of the food industry which are traditionally most exposed to bacterial contamination, especially the dairy, poultry and prepared meat products sectors. The compositions of the invention are particularly suitable for cheeses such as gorgonzola and taleggio, for which the problem of Listeria contamination is particularly critical.

When the rind of the finished product is sprayed with the solution according to the invention, a thin membrane forms. The machinery and equipment used for food production can also be sprayed. The finished products thus treated are conveyed on a steel conveyor belt fitted with a hot-air jet at 40°C, to eliminate the excess mixture and consolidate the membrane.

Treatment with the film-forming compositions according to the invention can be repeated after ripening.

The compositions of the invention can also be added to the packaging materials (paper, cardboard and plastic) conventionally used for food packaging.

An example of composition of the invention is set out below.

### EXAMPLE

| | |
|---|---|
| 40% *aloe vera* gel | 3 g |
| Chitosan | 1 g |
| Lactic acid | 1.5 g |
| Linoleic acid | 1.5 g |
| Oregano extract | 0.5 g |
| Thyme extract | 0.5 g |
| Olive-leaf extract | 0.5 g |
| Eucalyptol | 0.5 g |
| Nisin | 0.5 g |
| Silver proteinate | 0.5 g |
| Sterile water | 10 ml |

### Bibliography

- Davidson P.M., Branen A.L.(1993) Antimicrobials in foods, 2nd Edition, Marcel Decker inc., New York, USA.
- Giraffa G. Enterococcal bacteriocins, their potential as anti-Listeria factors in dairy technology. Food Microbial. 12,291-299 (1995).
- Mahendra R., Chikidas M. (2011). Natural antimicrobials in food safety and quality. CABI-CAB International, Cambridge, MA, USA.
- Gaggia F., Di Gioiua D., Baffoni B., The role of protective and probiotic cultures in food and feed and their impact in food safety. Tr.food Sci. Technol.22 (suppl.1),s58-s66 (2011

## Claims

1. An edible film-forming aqueous composition for preserving foodstuffs, comprising *Aloe vera* extract in percentages ranging from 10 to 50% by weight, chitosan in percentages ranging from 2 to 15% by weight, organic acids selected from lactic, salicylic, linoleic, acetic, propionic, oxalic, formic, elenolic, oleic, sorbic acids in percentages ranging from 10 to 50% by weight, extracts of oregano, thyme, *Olea europea,* rosemary, eucalyptus, mulberry, frankincense, sumac in percentages ranging from 5 to 20% by weight and optionally bacteriocin extracts.

2. A composition according to claim 1 wherein the *Aloe vera* extract is present in the concentration of 40% by weight.

3. A composition according to claim 1 or 2 wherein the organic acids are salicylic acid, lactic acid, oleic acid or linoleic acid, optionally conjugated.

4. A composition according to one or more of claims 1 to 3 wherein the aqueous composition further comprises one or more polysaccharides, polyelectrolytes, nisin, silver proteinate, thickening agents or hydroxytyrosol.

5. A composition according to one or more of claims 1 to 4 for preserving foodstuffs, materials and equipment used in the dairy, poultry and prepared meat products industries.

6. A composition according to claim 5 for preserving cheese and protecting it against *Listeria monocytogenes* contamination.

## Patentansprüche

1. Essbaren Film-bildende wässrige Zusammensetzung zur Konservierung von Lebensmitteln, umfassend *Aloe*-*vera*-Extrakt in Prozentsätzen im Bereich von 10 bis 50 Gew.-%, Chitosan in Prozentsätzen im Bereich von 2 bis 15 Gew.-%, organische Säuren, ausgewählt aus Milchsäure, Salicylsäure, Linolsäure, Essigsäure, Propionsäure, Oxalsäure, Ameisensäure, Elenolsäure, Ölsäure, Sorbinsäure, in Prozentsätzen im Bereich von 10 bis 50 Gew.-%, Extrakte von Oregano, Thymian, *Olea europea,* Rosmarin, Eukalyptus, Maulbeeren, Weihrauch, Sumach in Prozentsätzen im Bereich von 5 bis 20 Gew.-% und optional Bacteriocin-Extrakte.

2. Zusammensetzung nach Anspruch 1, wobei der *Aloe*-*vera*-Extrakt in der Konzentration von 40 Gew.-% vorhanden ist.

3. Zusammensetzung nach Anspruch 1 oder 2, wobei die organischen Säuren Salicylsäure, Milchsäure, Ölsäure oder Linolsäure, optional konjugiert, sind.

4. Zusammensetzung nach einem der mehreren der Ansprüche 1 bis 3, wobei die wässrige Zusammensetzung des Weiteren umfasst: ein oder mehrere Polysaccharid(e), Polyelektrolyt(e), Nisin, Silberproteinat, Verdickungsmittel oder Hydroxytyrosol.

5. Zusammensetzung nach einem oder mehreren der Ansprüche 1 bis 4 zur Konservierung von Lebensmitteln, Materialien und Gerätschaften, die verwendet werden in der Molkerei-, Geflügel- und Fleischprodukt-Industrie.

6. Zusammensetzung nach Anspruch 5 zur Konservierung von Käse und dessen Schutz gegen Kontamination mit *Listeria monocytogenes.*

## Revendications

1. Composition aqueuse filmogène comestible pour conserver les aliments, comprenant un extrait d'*Aloe vera* en des pourcentages se situant dans la plage allant de 10 à 50 % en poids, du chitosan dans des pourcentages se situant dans la plage allant de 2 à 15 % en poids, des acides organiques choisis parmi les acides lactique, salicyclique, linoléique, acétique, propionique, oxalique, formique, élénolique, oléique, sorbique en des pourcentages se situant dans la plage allant de 10 à 50 % en poids, des extraits d'origan, de thym, d'*Olea europea,* de romarin, d'eucalyptus, de mûrier, d'oliban, de sumac en des pourcentages se situant dans la plage allant de 5 à 20 % en poids et éventuellement des extraits de bactériocine.

2. Composition selon la revendication 1 dans laquelle l'extrait d'*Aloe vera* est présent à la concentration de 40 % en poids.

3. Composition selon la revendication 1 ou 2 dans laquelle les acides organiques sont l'acide salicylique, l'acide lactique, l'acide oléique ou l'acide linoléique, éventuellement conjugués.

4. Composition selon l'une ou plusieurs des revendications 1 à 3 dans laquelle la composition aqueuse comprend en outre un ou plusieurs polysaccharides, polyélectrolytes, nisine, protéinate d'argent, agents épaississants ou hydroxytyrosol.

5. Composition selon l'une ou plusieurs des revendications 1 à 4 pour conserver les aliments, les matériaux et les équipements utilisés dans les industries des produits laitiers, de volaille et de viande préparée.

6. Composition selon la revendication 5 pour conserver le fromage et le protéger contre une contamination par *Listeria monocytogenes.*
